# EUROPÄISCHE PATENTSCHRIFT

(11) **EP 2 014 047 B1**
(45) Veröffentlichungstag und Bekanntmachung des Hinweises auf die Patenterteilung: **11.11.2015**
(21) Anmeldenummer: 07728119.4
(22) Anmeldetag: 13.04.2007
(51) Int. Cl.: H04W 4/22, H04W 76/00, H04W 80/10

(54) **VEREINFACHTES VERFAHREN ZUR IMS REGISTRIERUNG BEI NOTRUFEN**
SIMPLIFIED METHOD FOR IMS REGISTRATION IN THE EVENT OF EMERGENCY CALLS
PROCÉDÉ SIMPLIFIE POUR L'INSCRIPTION IMS EN CAS D'APPEL D'URGENCE

(30) Priorität: 27.04.2006 DE 102006019719
(43) Veröffentlichungstag der Anmeldung: 14.01.2009
(60) Teilanmeldung: 15187072.2
(73) Patentinhaber: CELLULAR COMMUNICATIONS EQUIPMENT LLC, Plano, TX 75093 (US)
(72) Erfinder: LIEBHART, Rainer, 81476 München (DE)
(74) Vertreter: Hoarton, Lloyd Douglas Charles
(86) Internationale Anmeldenummer: PCT/EP2007/053654
(87) Internationale Veröffentlichungsnummer: WO 2007/125024

(56) Entgegenhaltungen:
- WO-A-03/094563
- 3GPP: "IP multimedia call control protocol based on Session Initiation Protocol (SIP) and Session Description Protocol (SDP); Stage 3, (Release 7) section 5.2.10" TECHNICAL SPECIFICATION GROUP CORE NETWORK AND TERMINALS, März 2006 (2006-03), XP002449789 3rd Generation Partnership Project
- 3GPP: "IP Multimedia Subsystem (IMS) emergency sessions (Release 7)" TECHNICAL SPECIFICATION GROUP SERVICES AND SYSTEM ASPECTS, März 2006 (2006-03), XP002449790 3rd Generation Partnership Project

## Beschreibung

Die Erfindung betrifft Verfahren und Vorrichtungen zur IMS Registrierung bei Notrufen.

Netze wie z.B. zellulare Mobilfunknetze sind dem Fachmann an sich aus z.B. Spezifikationen in www.etsi.org oder www.3gppp.org bekannt.

WO03/094563 A1 beschreibt ein Verfahren und ein System für eine Verbindungsaufbauprozedur, die von einem Endgerät ausgeht, zum Aufbau einer Verbindung eines speziellen Typs zu einem angerufenen Gerät. Hierbei wird eine Verbindungsaufbauanfrage, welche Ortinformationen und eine Kennung zur Identifizierung des angerufenen Geräts enthält, zum Aufbau der angefragten Verbindung zu einem Netzwerkgerät gesendet. Eine Datenbank wird zur Verfügung gestellt, welche Ortsinformationen und assoziierte Kennungen zum identifizieren des angerufenen Geräts speichert. Das Netzwerkgerät greift auf diese Datenbank zu, und wenn es feststellt dass die Kennung eine Verbindung eines speziellen Typs in einem Bereich, der durch die Ortsinformationen repräsentiert wird, verkörpert, wird die Verbindungsaufbauanfrage in einer Art und Weise fortgeführt, die für die Verbindung des speziellen Typs passend ist.

Das Dokument 3GPP "IP Multimedia Subsystem (IMS) emergency sessions (Release 7)" vom März 2006 beschreibt Notruf Dienste in einem IP Multimedia Subsystem (IMS) und die notwendigen Geräte um IMS Notruf Dienste zu unterstützen.

TS 23.167 Release 7 der 3GPP Standardisierungsorganisation spezifiziert Notrufe im IMS (IP Multimedia Subsystem). Diese 3GPP Technical Specification TS 23.167 betrifft auch Next Generation Fixed Networks wie sie z.B. bei ETSI TISPAN und CableLabs standardisiert werden. Ein wesentliches Grundprinzip bei IMS Notrufen ist die spezielle "IMS Notrufregistrierung". Die TS 23.167 geht gegenwärtig davon aus, dass sich ein Endgerät, das im IMS einen Notruf absetzen will, zuerst mittels einer eigenen Notruf SIP URI (auch Notruf Public User Identity genannt) im IMS registriert. Diese SIP URI (Session Initiation Protocol Uniform Resource Identifier) ist entweder im Endgerät vorkonfiguriert, oder das Endgerät erzeugt sie aus einer vorhandenen SIP URI, die z.B. auf der UICC (falls vorhanden) gespeichert ist (UICC = Universal Integrated Circuit Card). Im Fall von GPRS/UMTS geht der Registrierung im IMS der Aufbau eines Notruf- oder emergency- PDP (Packet Data Protocol) Kontextes voraus. Ein PDP Kontext baut eine Session zwischen dem Endgerät und einem GGSN auf und weist dem Endgerät eine IP und eine P-CSCF Adresse zu. Dieser PDP Kontext verwendet einen eigenen APN (Access Point Name), mit dessen Hilfe ein GGSN und eine P-CSCF (Proxy Call Session Control Function) im besuchten Mobilfunknetz (VPLMN) bestimmt werden. Dies ist notwendig, da der Notruf im VPLMN zur Notrufzentrale gerouted werden muss, im Roamingfall aber der GGSN und damit auch die P-CSCF durchaus im Heimatnetz des Teilnehmers stehen können (und üblicherweise dort auch stehen, da die APNs vom Heimatnetzbetreiber auf dem Endgerät vorkonfiguriert werden). Diese Vorgehensweise hat allerdings den Nachteil, dass der Aufbau eines PDP Kontextes und die anschließende IMS Registrierung sehr viel Zeit in Anspruch nehmen können (durchaus im Bereich von Sekunden). Aus diesem Grund werden zurzeit in 3GPP Überlegungen angestellt, wie auf die spezielle IMS Registrierung bei Notrufen verzichtet werden kann, falls das Endgerät bereits im IMS registriert ist. Der Sachverhalt wird dadurch erschwert, dass ein Endgerät sich in einem fremden Netz einbuchen kann, P-CSCF und GGSN aber trotzdem im Heimatnetz stehen können (so genanntes GPRS Roaming, im Gegensatz zu IMS Roaming wo P-CSCF und GGSN beide im besuchten Netz stehen). Die Erfindung beschreibt mögliche Verfahren wie auf eine spezielle IMS Registrierung bei Notrufen verzichtet werden kann, um damit den Rufaufbau wesentlich zu beschleunigen. Im Fall von GPRS/UMTS Netzen kann damit auch auf den Aufbau eines Notruf PDP Kontextes verzichtet werden.

Der bisherige Standard TS 23.167 schreibt vor, dass das Endgerät immer eine
Registrierung im IMS mittels der speziellen Notruf SIP URI durchführen muss.
Im Fall von GPRS/UMTS geht dieser IMS Registrierung der Aufbau eines speziellen PDP Kontextes im besuchten Netz mittels des speziellen Notruf APN voraus.

Aufgabe der Erfindung ist eine Vereinfachung des Aufbaus einer Notrufverbindung.
Die Aufgabe wird jeweils durch die Gegenstände der Patentansprüche gelöst.

Die Erfindung beschreibt Verfahren wie auf die spezielle IMS Notrufregistrierung und bei GPRS/UMTS auf den Aufbau eines speziellen PDP Kontextes verzichtet werden kann. Es wird dabei davon ausgegangen, dass das Endgerät einen Identifier (Netzidentifikation), der sein Heimatnetz (= z.B. das seiner Mobilfunkteilnehmeridentifikationskarte) identifiziert, lokal gespeichert hat. Im Mobilfunk ist dieser Identifier als MCC/MNC (Mobile Country Code/Mobile Network Code) des Heimatnetzes auf der SIM/USIM Karte abgelegt.

Falls das Endgerät beim Einbuchen in das besuchte Netz von diesem über den Netzwerkidentifier des besuchten Netzes informiert wird (bei GPRS/UMTS wird diese Information z.B. durch das Funknetzwerk ausgestrahlt, bei 3GPP WLAN wird diese Information während der Zugangsauthentifizierung an das Endgerät übermittelt, bei Next Generation Fixed Networks könnte ein ähnliches Verfahren wie bei 3GPP WLAN Anwendung finden), kann es auf die spezielle IMS Registrierung für Notrufe verzichten, falls das Endgerät bereits im IMS registriert ist und der Vergleich zwischen dem gespeicherten Identifier des Heimatnetzes und dem erhaltenen Identifier des besuchten Netzes ergeben hat, dass beide Netze identisch sind, das Endgerät sich also nicht in einem fremden Netz bewegt. Da sich Teilnehmer überwiegend in ihrem Heimatnetz aufhalten, und das Endgerät, um "always-on" und damit erreichbar zu sein immer im IMS registriert sein muss, wird durch dieses Verfahren eine spezielle IMS Registrierung für Notrufe mit zugehörigem Aufbau eines PDP Kontextes im Falle von GPRS/UMTS in den meisten Fällen vermieden.

Nach einer Ausgestaltung des allgemeinen Verfahrens schlägt die Erfindung vor, dass die P-CSCF in der Antwort auf die Registrierungsanforderung des Endgerätes (SIP 200 OK als Antwort zur SIP REGISTER Nachricht) den Identifier des Netzes, in dem sie sich selber befindet, zum Endgerät sendet. Stellt das Endgerät wie vorhin beschrieben fest, dass es sich in einem besuchten Netz und nicht im Heimatnetz aufhält, kann es mittels der Information, die es während der Registrierung von der P-CSCF erhalten hat, ermitteln ob sich die P-CSCF ebenfalls im besuchten Netz befindet. Falls dies der Fall ist, ist eine spezielle IMS Registrierung für Notrufe nicht mehr notwendig. Das Endgerät kann bei Notrufen sofort die SIP Session mittels einer SIP INVITE Nachricht aufbauen. In allen anderen Fällen ist die Notrufregistrierung erforderlich. Dieses alternative Verfahren deckt die Szenarien, in denen das zuvor beschriebene Verfahren anwendbar ist, mit ab, ist aber allgemeiner anwendbar.

Falls nicht jede P-CSCF in der Lage ist Notrufe zu behandeln, kann die P-CSCF eine diesbezügliche Information ebenfalls in der Antwort auf die Registrierungsanforderung des Endgerätes zu diesem zurücksenden. Das Endgerät muss dann diese Information bei der Entscheidung, ob es eine spezielle Notrufregistrierung durchführen muss oder nicht, berücksichtigen.

Durch die Erfindung werden Verfahren beschrieben, durch die in den meisten Fällen auf eine spezielle IMS Registrierung für Notrufe und bei GPRS/UMTS Zugangssystemen auch auf den Aufbau eines eigenen PDP Kontextes verzichtet werden kann. Da Aufbau eines PDP Kontextes und IMS Registrierung zeitaufwändige Prozeduren sind, ist damit eine wesentliche Zeitersparnis gegeben, was insbesondere bei Notrufen eine bedeutende Anforderung ist.

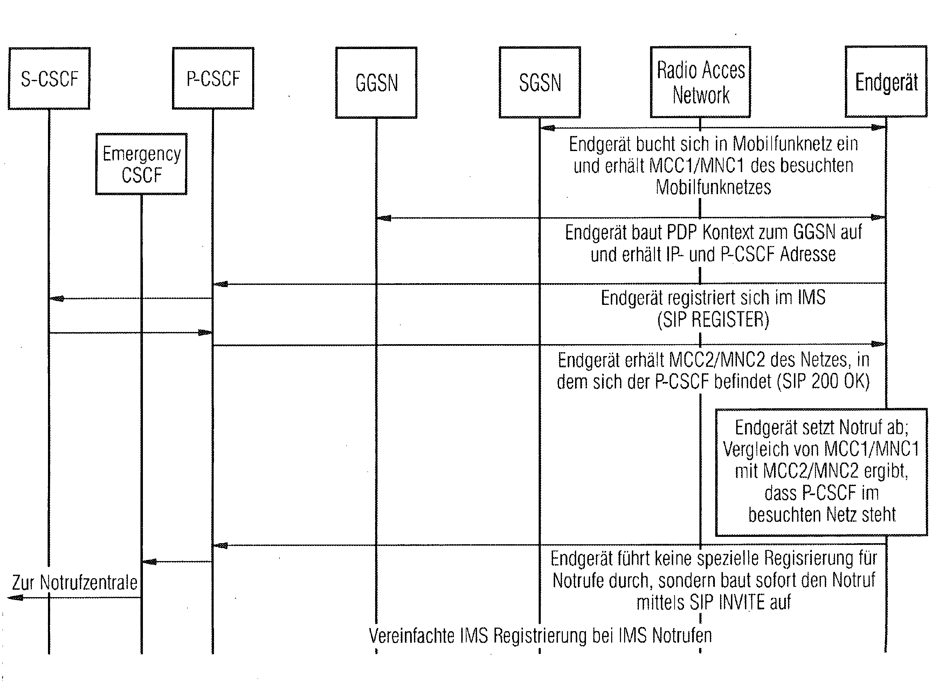

Die Erfindung ist insbesondere in zellularen Mobilfunknetzen, aber auch in WLAN/WIMAX Netzen und Festnetzen einsetzbar. Weitere Merkmale und Vorteile der Erfindung ergeben sich aus den weiteren Patentansprüchen und der nachfolgenden Beschreibung eines Ausführungsbeispiels anhand der Zeichnung. Dabei zeigt das Ausführungsbeispiel in Fig. 1 einen Ablaufplan, der darstellt, wie ein Endgerät nach erfolgreicher IMS Registrierung einen Notruf über ein Mobilfunkzugangsnetz absetzen kann, ohne vorher eine spezielle Notrufregistrierung im IMS durchführen zu müssen.

Fig. 1 zeigt einige Komponenten "S-CSCF", "P-CSCF", "GGSN", "SGSN", "Radio Access Network" eines an sich dem Fachmann aus z.B. Spezifikationen in www.etsi.org oder www.3gppp.org bekannten Mobilfunknetzes.

Ein Endgerät (Fig 1, "Endgerät") bucht sich in ein Mobilfunknetz ein und erhält eine Netzidentifikation ("MCC1/MNC1") des von ihm besuchten Mobilfunknetzes.

Das Endgerät baut dann einen PDP Kontext zu einem GGSN des Mobilfunknetzes auf und erhält eine IP- Adresse und eine P-CSCF Adresse für die Kommunikation mit der P-CSCF zugewiesen.

Das Endgerät registriert sich darauf bei der P-CSCF im IMS (mit einer "SIP REGISTER" Nachricht). Von der P-CSCF erhält das Endgerät die Netzidentifikation "MCC2/MNC2" des Netzes, in dem sich diese P-CSCF befindet (mit einer Nachricht "SIP 200 OK").

Wenn später das Endgerät einen Notruf absetzen soll ist dies z.B. folgendermaßen möglich:
Ein Vergleich der (im Endgerät nach dessen Anmeldung/Authentisierung etc beim von ihm besuchten Mobilfunknetz gespeicherten) Netzidentifikation "MCC1/MNC1" des vom Endgerät besuchten Netzes mit der Netzidentifikation "MCC2/MNC2" des Netzes in welchem sich die P-CSCF befindet, ergibt, dass die P-CSCF sich im vom Endgerät besuchten Netz befindet.

Deshalb führt das Endgerät keine spezielle (eigene / weitere) Registrierung für den von ihm gewünschten Notruf durch, sondern baut sofort den Notruf mittels einer "SIP INVITE" Nachricht auf. Hierdurch wird Zeit gespart.

## Patentansprüche

1. Verfahren zum Aufbau einer Notrufverbindung von einem Endgerät (Fig. 1: "Endgerät") über ein vom Endgerät besuchtes Netz (Fig. 1: "S-CSCF", "P-CSCF", "GGSN", "SGSN", "Radio Access Network"...) mit einem Internet Protocol Multimedia Subsystem,
wobei, falls das Endgerät bereits im Internet Protocol Multimedia Subsystem registriert ist, beim Aufbau einer Notrufverbindung auf eine Internet Protocol Multimedia Subsystem Registrierung des Endgerätes im Internet Protocol Multimedia Subsystem für diese Notrufverbindung verzichtet wird,
falls ein Vergleich zwischen einer dem Endgerät beim Einbuchen in das besuchte Netz mitgeteilten Netzidentifikation ("network identifier", Fig. 1: "MCC1"/"MNC1") des besuchten Netzes mit einer Netzidentifikation des Heimat-Netzes des Endgerätes eine Übereinstimmung dieser Netzidentifikationen ergibt.

2. Verfahren nach Anspruch 1,
**dadurch gekennzeichnet, dass**
eine Übereinstimmung dieser Netzidentifikationen angibt, dass das Endgerät und/oder darin befindliche Mobilfunkteilnehmeridentitätsmodul sich in seinem Heimatnetz aufhält.

3. Verfahren nach Anspruch 1,
**dadurch gekennzeichnet, dass**,
falls der Vergleich eine Übereinstimmung der Netzidentifikationen ergibt, das Endgerät den Notruf über eine bereits bestehende Internet Protocol Multimedia Subsystem Registrierung absetzt.

4. Verfahren nach Anspruch 1,
**dadurch gekennzeichnet, dass**
der Vergleich im Endgerät erfolgt.

5. Verfahren nach einem der vorhergehenden Ansprüche,
**dadurch gekennzeichnet, dass**
die Netzidentifikationen zumindest einen Mobile Country Code (MCC) oder Mobile Network Code (MNC) umfasst.

6. Verfahren nach einem der vorhergehenden Ansprüche,
**dadurch gekennzeichnet, dass**
das Netz ein zellulares Mobilfunknetz, ein Wireless Local Area Network, ein WIMAX Netz oder ein Festnetz ist.

7. Verfahren nach einem der vorhergehenden Ansprüche,
**dadurch gekennzeichnet, dass**
dem Endgerät die Netzidentifikation des besuchten Mobilfunknetzes bei der Authentisierung des Endgerätes gegenüber dem besuchten Mobilfunknetz übermittelt wird.

8. Verfahren nach einem der vorhergehenden Ansprüche,
**dadurch gekennzeichnet, dass**
eine Proxy Call State Control Function eines Mobilfunknetzes in einer Antwort ("SIP 200 OK") auf eine Internet Protocol Multimedia Subsystem Registrierungsanforderung ("SIP REGISTER") des Endgerätes die Netzidentität ("network identifier", Fig. 1: "MCC1"/"MNC1") des Netzes, in dem die Proxy Call State Control Function sich selber befindet, zum Endgerät sendet,
worauf das Endgerät, wenn es feststellt, dass das von ihm besuchte Netz nicht das Heimatnetz ist, mittels einer bei der Registrierung von der Proxy Call State Control Function erhaltenen Netzidentifikation (Fig. 1: "MCC2"/"MNC2") ermittelt, ob sich die Proxy Call State Control Function ebenfalls im vom Endgerät besuchten Mobilfunknetz befindet, in welchem Fall beim Aufbau einer Notrufverbindung auf eine spezielle Internet Protocol Multimedia Subsystem Registrierung des Endgerätes im Internet Protocol Multimedia Subsystem für diese Notrufverbindung verzichtet wird und vom Endgerät für die Notrufverbindung eine Session Initiation Protocol Session (Fig. 1: SIP INVITE) aufgebaut wird, während andernfalls beim Aufbau einer Notrufverbindung zuerst eine spezielle Internet Protocol Multimedia Subsystem Registrierung des Endgerätes im Internet Protocol Multimedia Subsystem für diese Notrufverbindung erfolgt, bevor für die Notrufverbindung eine Session Initiation Protocol Session (Fig. 1: SIP INVITE) aufgebaut wird.

9. Verfahren nach dem vorhergehenden Anspruch,
**dadurch gekennzeichnet, dass**
für die Notrufverbindung eine Session Initiation Protocol Session mittels einer "SIP INVITE"- Nachricht aufgebaut wird.

10. Verfahren nach einem der vorhergehenden Ansprüche, **dadurch gekennzeichnet, dass**,
falls die Proxy Call State Control Function nicht in der Lage ist Notrufe zu behandeln, die Proxy Call State Control Function eine diesbezügliche Information in einer Antwort auf eine Registrierungsanforderung des Endgerätes zu diesem Endgerät zurücksendet und das Endgerät dann diese Information bei der Entscheidung, ob es eine spezielle Notrufregistrierung durchführen muss oder nicht, berücksichtigt.

11. Verfahren nach einem der vorhergehenden Ansprüche, **dadurch gekennzeichnet, dass**,
wenn das Netzteil ein General Packet Radio Service oder Universal Mobile Telecommunication System umfasst, auf den Aufbau eines eigenen PDP Kontextes, zusammen mit der Internet Protocol Multimedia Subsystem Registrierung des Endgerätes für diese Notrufverbindung, verzichtet wird.

12. Endgerät zum Aufbau einer Notrufverbindung von einem Endgerät über ein vom Endgerät besuchtes Netz mit einem Internet Protocol Multimedia Subsystem, umfassend
Mittel zum Empfangen einer Netzidentifikation des besuchten Netzes die dem Endgerät beim Einbuchen in das besuchte Netz mitgeteilt wird,
Mittel zum Vergleichen der empfangenen Netzidentifikation des besuchten Netzes mit einer Netzidentifikation des Heimat-Netzes,
Mittel zum Aufbau einer Notrufverbindung wobei, falls das Endgerät bereits im Internet Protocol Multimedia Subsystem registriert ist und das Mittel zum Vergleichen eine Übereinstimmung der Netzidentifikationen ergibt, beim Aufbau der Notrufverbindung auf eine Internet Protocol Multimedia Subsystem Registrierung des Endgerätes im Internet Protocol Multimedia Subsystem für diese Notrufverbindung verzichtet wird.

13. Endgerät nach Anspruch 12,
**dadurch gekennzeichnet, dass**
die Notrufverbindung über eine bereits bestehende Internet Protocol Multimedia Subsystem Registrierung aufgebaut wird, wenn das Mittel zum Vergleichen eine Übereinstimmung der Netzidentifikationen ergibt.

14. Endgerät nach Anspruch 12 oder 13, wobei die Netzidentifikation des besuchten Mobilfunknetzes bei der Authentisierung des Endgerätes gegenüber dem besuchten Mobilfunknetz übermittelt wird.

15. Endgerät nach einem der Ansprüche 12 bis 14, umfassend ein Subscriber Identity Modul order ein Universal Subscriber Identity Modul auf dem die Netzidentifikation des Heimatnetzes abgelegt ist.

16. Endgerät nach einem der Ansprüche 12 bis 15, wobei die Netzidentifikationen zumindest einen Mobile Country Code (MCC) oder Mobile Network Code (MNC) umfasst.

17. Endgerät nach einem der Ansprüche 12 bis 16, wobei das besuchte Netz ein zellulares Mobilfunknetz, ein Wireless Local Area Network, ein WIMAX Netz oder ein Festnetz ist.

18. Endgerät nach einem der Ansprüche 12 bis 17, wobei die Netzidentifikation von einer Proxy Call State Control Function eines Mobilfunknetzes in einer Antwort ("SIP 200 OK") auf eine Internet Protocol Multimedia Subsystem Registrierungsanforderung ("SIP REGISTER") des Endgerätes empfangen wird und die Netzidentität ("network identifier", Fig. 1: "MCC1"/"MNC1") des Netzes, in dem die Proxy Call State Control Function sich selber befindet, angibt, umfassend
Mittel zum Feststellen, wenn das besuchte Netz nicht das Heimatnetz ist, mittels einer bei der Registrierung von der Proxy Call State Control Function erhaltenen Netzidentifikation, ob sich die Proxy Call State Control Function im vom Endgerät besuchten Mobilfunknetz befindet, in welchem Fall beim Aufbau einer Notrufverbindung auf eine spezielle Internet Protocol Multimedia Subsystem Registrierung des Endgerätes im Internet Protocol Multimedia Subsystem für diese Notrufverbindung verzichtet wird und vom Endgerät für die Notrufverbindung eine Session Initiation Protocol Session (Fig. 1: SIP INVITE) aufgebaut wird, während andernfalls beim Aufbau einer Notrufverbindung zuerst eine spezielle Internet Protocol Multimedia Subsystem Registrierung des Endgerätes im Internet Protocol Multimedia Subsystem für diese Notrufverbindung erfolgt, bevor für die Notrufverbindung eine Session Initiation Protocol Session (Fig. 1: SIP INVITE) aufgebaut wird.

19. Endgerät nach Anspruch 18, wobei für die Notrufverbindung eine Session Initiation Protocol Session mittels einer "SIP INVITE"- Nachricht aufgebaut wird.

20. Endgerät nach einem der Ansprüche 18 oder 19, unfassend
Mittel zur Entscheidung ob eine spezielle Notrufregistrierung durchgeführt werden muss oder nicht, nachdem Informationen von der Proxy Call State Control Function empfangen wurden dass die Proxy Call State Control Function nicht in der Lage ist Notrufe zu behandeln.

## Claims

1. A method for establishing an emergency call connection from a terminal (Fig. 1: "Terminal") via a network visited by the terminal (Fig. 1: "S-CSCF", "P-CSCF", "GGSN", "SGSN", "Radio Access Network"...), with an Internet Protocol Multimedia Subsystem,
whereby, if the terminal is already registered in the Internet Protocol Multimedia Subsystem, when an emergency call connection is established, an Internet Protocol Multimedia Subsystem registration of the terminal in the Internet Protocol Multimedia Subsystem is dispensed with for this emergency call connection,
if a comparison between a network identifier (Fig. 1: "MCC1"/"MNC1") of the visited network that is transmitted to the terminal when logging into the visited network and a network identifier of the terminal's home network indicates a match between these network identifiers.

2. The method of claim 1 wherein a match of these network identifiers indicates that the terminal and/or the mobile radio subscriber identity module that is present in it is in its home network.

3. The method of claim 1 wherein if the comparison indicates a match of the network identifiers, the terminal sends the emergency call via an already existing Protocol Multimedia Subsystem registration.

4. The method of claim 1 wherein the comparison is carried out in the terminal.

5. The method of any one of the preceding claims wherein the network identifiers comprise at least one Mobile Country Code (MCC) or Mobile Network Code (MNC).

6. The method of any one of the preceding claims wherein the network is a cellular mobile radio network, a Wireless Local Area Network, a WIMAX network or landline network.

7. The method of any one of the preceding claims wherein the network identifier of the visited mobile radio network is transmitted to the terminal during the authentication of the terminal with the visited mobile radio network.

8. The method of any one of the preceding claims wherein a Proxy Call State Control Function of a mobile radio network sends the network identifier (Fig. 1: "MCC1"/"MNC1") of the network in which the Proxy Call State Control Function itself is located to the terminal in an answer ("SIP 200 OK") to an Internet Protocol Multimedia Subsystem registration request ("SIP REGISTER") by the terminal, whereupon the terminal, if it finds that the network it is visiting is not its home network, determines by way of a network identifier (Fig.1: "MCC2"/"MNC2") received upon registration from the Proxy Call State Control Function, whether the Proxy Call State Control Function is also located in the mobile radio network which the terminal is visiting, in which case, when an emergency call connection is established, a special Internet Protocol Multimedia Subsystem registration of the terminal in the Internet Protocol Multimedia Subsystem is dispensed with for this emergency call connection, and the terminal establishes a Session Initiation Protocol Session (Fig.1: SIP INVITE) for the emergency call connection, whereas otherwise, when an emergency call connection is established, a special Internet Protocol Multimedia Subsystem registration of the terminal is first effected in the Internet Protocol Multimedia Subsystem for that emergency call connection before a Session Initiation Protocol Session (Fig. 1: SIP INVITE) is established for the emergency call connection.

9. The method of the preceding claim wherein, for the emergency call connection, a Session Initiation Protocol Session is established by way of a "SIP INVITE" message.

10. The method of any one of the preceding claims wherein, if the Proxy Call State Control Function is unable to handle emergency calls, the Proxy Call State Control Function, in an answer to a registration request by the terminal, sends information to this effect back to that terminal which then takes this information into account when deciding whether it must perform a special emergency call registration or not.

11. The method of any one of the preceding claims wherein, if the power supply unit comprises a General Packet Radio Service or Universal Mobile Telecommunication System, then the establishment of a separate PDP context, together with the Internet Protocol Multimedia Subsystem registration of the terminal for that emergency call connection, is dispensed with.

12. A terminal for establishing an emergency call connection by a terminal via a network visited by the terminal, said network having an Internet Protocol Multimedia Subsystem, comprising
means for receiving a network identifier of the visited network which (network identifier) is communicated to the terminal when logging in to the visited network,
means for comparing the received network identifier of the visited network with a network identifier of the home network,
means for establishing an emergency call connection, whereby if the terminal is already registered in the Internet Protocol Multimedia Subsystem and the means for comparing indicates a match of the network identifiers, when the emergency call connection is established an Internet Protocol Multimedia Subsystem registration of the terminal in the Internet Protocol Multimedia Subsystem is dispensed with for this emergency call connection.

13. The terminal of claim 12 wherein the emergency call connection is established via an already existing Protocol Multimedia Subsystem registration if the means for comparing indicates a match of the network identifiers.

14. The terminal of claim 12 or 13, with the network identifier of the visited mobile radio network being communicated upon the authentication of the terminal with the visited mobile radio network.

15. The terminal of any one of claims 12 to 14, comprising a Subscriber Identity Module or a Universal Subscriber Identity Module on which the network identifier of the home network is stored.

16. The terminal of any one of claims 12 to 15, with the network identifiers comprising at least one Mobile Country Code (MCC) or Mobile Network Code (MNC).

17. The terminal of any one of claims 12 to 16, with the visited network being a cellular mobile radio network, a Wireless Local Area Network, a WIMAX network or a landline network.

18. The terminal of any one of claims 12 to 17, whereby the network identifier of a Proxy Call State Control Function of a mobile radio network is received in an answer ("SIP 200 OK") to an Internet Protocol Multimedia Subsystem registration request ("SIP REGISTER") made by the terminal, indicating the network identifier (Fig. 1: "MCC1"/"MNC1") of the network in which the Proxy Call State Control Function is itself located, comprising
means for determining, if the visited network is not the home network, by way of a network identifier received on registration from the Proxy Call State Control Function, whether the Proxy Call State Control Function is located in the mobile radio network visited by the terminal, in which case, when an emergency call connection is established, a special Internet Protocol Multimedia Subsystem registration of the terminal in the Internet Protocol Multimedia Subsystem is dispensed with for this emergency call connection, and the terminal establishes a Session Initiation Protocol Session (Fig.1: SIP INVITE) for the emergency call connection, whereas otherwise, when an emergency call connection is established, a special Internet Protocol Multimedia Subsystem registration of the terminal is first effected in the Internet Protocol Multimedia Subsystem for that emergency call connection before a Session Initiation Protocol Session (Fig. 1: SIP INVITE) is established for the emergency call connection.

19. The terminal of claim 18 wherein for the emergency call connection a Session Initiation Protocol Session is established by means of a "SIP INVITE" message.

20. The terminal of either of claims 18 or 19 comprising means for deciding whether a special emergency call registration must be carried out or not after information is received from the Proxy Call State Control Function that the Proxy Call State Control Function is unable to handle emergency calls.

## Revendications

1. Procédé d'établissement d'une connexion d'appel d'urgence à partir d'un terminal (fig. 1 : « Terminal ») via un réseau visité par le terminal (fig. 1 : « S-CSCF », « P-CSCF », « GGSN », « SGSN », « Réseau d'accès radio », etc.) avec un sous-système multimédia de protocole Internet,
dans lequel si le terminal est déjà enregistré dans le sous-système multimédia de protocole Internet, quand une connexion d'appel d'urgence est établie, un enregistrement de sous-système multimédia de protocole Internet du terminal dans le sous-système multimédia de protocole Internet devient superflu pour cette connexion d'appel d'urgence,
si une comparaison entre un identifiant réseau (fig. 1 : « MCC1 »/« MNC1 ») du réseau visité, qui est transmis au terminal lors de la connexion au réseau visité, et un identifiant réseau du réseau domestique du terminal, indique une concordance entre ces identifiants réseau.

2. Procédé selon la revendication 1, dans lequel une concordance de ces identifiants réseau indique que le terminal et/ou le module d'identification d'abonné de radiocommunication mobile qu'il inclut sont dans leur réseau domestique.

3. Procédé selon la revendication 1, dans lequel si la comparaison indique une concordance des identifiants réseau, le terminal envoie l'appel d'urgence via un enregistrement de sous-système multimédia de protocole Internet déjà existant.

4. Procédé selon la revendication 1, dans lequel la comparaison est effectuée dans le terminal.

5. Procédé d'authentification selon l'une quelconque des revendications précédentes, dans lequel les identifiants réseau comprennent au moins un indicatif de pays de mobile (MCC) ou un code de réseau de mobile (MNC).

6. Procédé selon l'une quelconque des revendications précédentes, dans lequel le réseau est un réseau de radiocommunication mobile cellulaire, un réseau local sans fil, un réseau WIMAX ou un réseau fixe.

7. Procédé selon l'une quelconque des revendications précédentes, dans lequel l'identifiant réseau du réseau de radiocommunication mobile visité est transmis au terminal pendant l'authentification du terminal auprès du réseau de radiocommunication mobile visité.

8. Procédé selon l'une quelconque des revendications précédentes, dans lequel une fonction de contrôle d'état d'appel de proxy d'un réseau de radiocommunication mobile envoie au terminal l'identifiant réseau (fig. 1 : « MCC1 »/« MNC1 ») du réseau sur lequel la fonction de contrôle d'état d'appel de proxy est située, dans une réponse (« SIP 200 OK ») à une demande d'enregistrement de sous-système multimédia de protocole Internet (« SIP REGISTER ») envoyée par le terminal,
dans lequel le terminal, s'il détecte que le réseau qu'il est en train de visiter n'est pas son réseau domestique, détermine au moyen d'un identifiant réseau (fig. 1 : « MCC2 »/« MNC2 ») reçu, lors de l'enregistrement, de la fonction de contrôle d'état d'appel de proxy, si la fonction de contrôle d'état d'appel de proxy est également située dans le réseau de radiocommunication mobile que le terminal est en train de visiter, auquel cas, quand une connexion d'appel d'urgence est établie, un enregistrement de sous-système multimédia de protocole Internet spécial du terminal dans le sous-système multimédia de protocole Internet devient superflu pour cette connexion d'appel d'urgence, et le terminal établit une session de protocole d'ouverture de session (fig. 1 : SIP INVITE) pour la connexion d'appel d'urgence, alors que sinon, quand une connexion d'appel d'urgence est établie, un enregistrement de sous-système multimédia de protocole Internet spécial du terminal est d'abord effectué dans le sous-système multimédia de protocole Internet pour cette connexion d'appel d'urgence avant qu'une session de protocole d'ouverture de session (fig. 1 : SIP INVITE) ne soit établie pour la connexion d'appel d'urgence.

9. Procédé selon l'une quelconque des revendications précédentes, dans lequel, pour la connexion d'appel d'urgence, une session de protocole d'ouverture de session est établie au moyen d'un message « SIP INVITE ».

10. Procédé selon l'une quelconque des revendications précédentes, dans lequel, si la fonction de contrôle d'état d'appel de proxy n'est pas capable de gérer des appels d'urgence, la fonction de contrôle d'état d'appel de proxy, dans une réponse à une demande d'enregistrement par le terminal, renvoie des informations à cet effet à ce terminal, qui prend alors en compte ces informations pour décider s'il doit réaliser un enregistrement d'appel d'urgence spécial ou non.

11. Procédé selon l'une quelconque des revendications précédentes, dans lequel, si l'unité d'alimentation comprend un service général de radiocommunication en mode paquet ou un système universel de télécommunications mobiles, alors l'établissement d'un contexte PDP séparé, conjointement avec l'enregistrement de sous-système multimédia de protocole Internet du terminal pour cette connexion d'appel d'urgence, devient superflu.

12. Terminal pour l'établissement d'une connexion d'appel d'urgence par un terminal via un réseau visité par le terminal, ledit réseau comprenant un sous-système multimédia de protocole Internet, comprenant :
un moyen de réception d'un identifiant réseau du réseau visité, ledit identifiant réseau étant communiqué au terminal lors de la connexion au réseau visité ;
un moyen de comparaison de l'identifiant réseau reçu du réseau visité à un identifiant réseau du réseau domestique,
un moyen d'établissement d'une connexion d'appel d'urgence, dans lequel si le terminal est déjà enregistré dans le sous-système multimédia de protocole Internet, et le moyen de comparaison indique une concordance des identifiants réseau, quand la connexion d'appel d'urgence est établie, un enregistrement de sous-système multimédia de protocole Internet du terminal dans le sous-système multimédia de protocole Internet devient superflu pour cette connexion d'appel d'urgence.

13. Terminal selon la revendication 12, dans lequel la connexion d'appel d'urgence est établie via un enregistrement de sous-système multimédia de protocole Internet déjà existant si le moyen de comparaison indique une concordance des identifiants réseau.

14. Terminal selon la revendication 12 ou 13, dans lequel l'identifiant réseau du réseau de radiocommunication mobile visité est communiqué lors de l'authentification du terminal auprès du réseau de radiocommunication mobile visité.

15. Terminal selon l'une quelconque des revendications 12 à 14, comprenant un module d'identification d'abonné ou un module universel d'identification d'abonné sur lequel est stocké l'identifiant réseau du réseau domestique.

16. Terminal selon l'une quelconque des revendications 12 à 15, dans lequel les identifiants réseau comprennent au moins un indicatif de pays de mobile (MCC) ou un code de réseau de mobile (MNC).

17. Terminal selon l'une quelconque des revendications 12 à 16, dans lequel le réseau visité est un réseau de radiocommunication mobile cellulaire, un réseau local sans fil, un réseau WIMAX ou un réseau fixe.

18. Terminal selon l'une quelconque des revendications 12 à 17, dans lequel l'identifiant réseau d'une fonction de contrôle d'état d'appel de proxy d'un réseau de radiocommunication mobile est reçu dans une réponse (« SIP 200 OK ») à une demande d'enregistrement de sous-système multimédia de protocole Internet (« SIP REGISTER ») effectuée par le terminal, indiquant l'identifiant réseau (fig. 1 : « MCC1 »/« MNC1 ») du réseau sur lequel la fonction de contrôle d'état d'appel de proxy est située, comprenant :
un moyen de détermination, si le réseau visité n'est pas le réseau domestique, au moyen d'un identifiant réseau reçu, lors de l'enregistrement, de la fonction de contrôle d'état d'appel de proxy, de si la fonction de contrôle d'état d'appel de proxy est située dans le réseau de radiocommunication mobile visitée par le terminal, auquel cas, quand une connexion d'appel d'urgence est établie, un enregistrement de sous-système multimédia de protocole Internet spécial du terminal dans le sous-système multimédia de protocole Internet devient superflu pour cette connexion d'appel d'urgence, et le terminal établit une session de protocole d'ouverture de session (fig. 1 : SIP INVITE) pour la connexion d'appel d'urgence, alors que sinon, quand une connexion d'appel d'urgence est établie, un enregistrement de sous-système multimédia de protocole Internet spécial du terminal est d'abord effectué dans le sous-système multimédia de protocole Internet pour cette connexion d'appel d'urgence avant qu'une session de protocole d'ouverture de session (fig. 1 : SIP INVITE) ne soit établie pour la connexion d'appel d'urgence.

19. Terminal selon la revendication 18, dans lequel, pour la connexion d'appel d'urgence, une session de protocole d'ouverture de session est établie au moyen d'un message « SIP INVITE ».

20. Terminal selon l'une quelconque des revendications 18 et 19, comprenant un moyen servant à décider si un enregistrement d'appel d'urgence spécial doit être réalisé ou non après la réception d'information en provenance de la fonction de contrôle d'état d'appel de proxy indiquant que la fonction de contrôle d'état d'appel de proxy n'est pas capable de gérer des appels d'urgence.
